# NEUE EUROPÄISCHE PATENTSCHRIFT

(11) **EP 0 116 359 B2**
(45) Veröffentlichungstag und Bekanntmachung des Hinweises auf die Entscheidung über den Einspruch: **24.03.1993**
(45) Hinweis auf die Patenterteilung: 11.05.1988
(21) Anmeldenummer: 84101178.6
(22) Anmeldetag: 06.02.1984
(51) Int. Cl.: B60B 17/00, C21D 9/34, C21D 1/09

(54) **Eisenbahnrad**
Rail wheel
Roue de véhicule ferroviaire

(30) Priorität: 09.02.1983 SE 8300675
(43) Veröffentlichungstag der Anmeldung: 22.08.1984
(73) Patentinhaber: ASEA AB, S-721 83 Västeras (SE)
(72) Erfinder: Ernerudh, Tore, Ing., S-735 00 Surahammar (SE); Lenasson, Carl-Gustav, Dipl.-Ing., S-735 00 Surahammar (SE)
(74) Vertreter: Boecker, Joachim, Dr.-Ing.

(56) Entgegenhaltungen:
- BE-A- 425 840
- CH-A- 385 906
- DE-C- 971 761
- US-A- 1 563 170
- US-A- 2 019 281
- PATENTS ABSTRACTS OF JAPAN, Band 6, Nr. 90 (C-104)[968], 27, Mai 1982; & JP - A - 57 23 023 (TOKYO SHIBAURA DENKI K.K.) 06-02-1982

## Beschreibung

Die vorliegende Erfindung betrifft ein Eisenbahnrad gemäss dem Oberbegriff des Anspruches 1. Ein solches Eisenbahnrad ist bekannt aus den « Patent Abstracts of Japan », Band 6, Nr. 90 (C-104), (968) vom 27. Mai 1982, & JP-A-5 723 023.

Bei einem Eisenbahnrad der vorgenannten Art unterliegt die Innenseite des Spurkranzes durch das ständige Gleiten an der Schiene einem starken Verschleiss. Dies gilt sowohl für aus einem Stück gefertigte Eisenbahnräder als auch für solche, bei denen der die Lauffläche und den Spurkranz umfassende Teil in Form eines Ringes oder Reifens auf das Eisenbahnrad aufgeschrumpft ist.

Es ist bereits bekannt, Eisenbahnräder mit warmgehärteten Spurkränzen herzustellen, wobei der gesamte Spurkranz gehärtet wird. Der Nachteil solcher Räder besteht darin, dass beim Warmhärten die einzelnen Teile des Rades unterschiedliche Temperaturen annehmen, wodurch ein gutes Ergebnis der Härtung in Frage gestellt wird. Ein weiteres Problem bei dieser Warmhärtung besteht darin, dass in den Übergangszonen zu den nicht gehärteten Teilen des Rades leicht Abplatz- und/oder Risserscheinungen auftreten können.

Aus den « Patent Abstracts of Japan », Band 6, Nr. 90 (C-104), (968) vom 27. Mai 1982, & JP-A-5 723 023 ist es bereits bekannt, den Spurkranz an seiner zur Lauffläche gerichteten Seite mittels eines Laserstrahls zu härten. Auch eine Vorrichtung zur Durchführung dieses Härtungsvorganges ist angegeben. Auch in der (nicht vorveröffentlichten) SE-A-8 300 015-8 und EP-A-0115 046 wird vorgeschlagen, den zur Lauffläche gerichteten Teil des Spurkranzes zumindest teilweise bei einer unter 600 Grad Celsius liegenden Temperatur zu härten.

Der Erfindung liegt die Aufgabe zugrunde, ein Eisenbahnrad der eingangs genannten Art zu entwickeln, welches hinsichtlich seiner Laufeigenschaften gegenüber dem bekannten Eisenbahnrad weiter verbessert ist.

Zur Lösung dieser Aufgabe wird ein Eisenbahnrad nach dem Oberbegriff des Anspruches 1 vorgeschlagen, welches erfindungsgemäss die im kennzeichnenden Teil des Anspruches 1 genannten Merkmale hat.

Ausgestaltungen und Weiterbildungen der Erfindung sind in den weiteren Ansprüchen genannt.

Gemäss der Erfindung wird neben dem Spurkranz auch die Lauffläche des Eisenbahnrades ganz oder teilweise lasergehärtet. Bei einer bevorzugten Ausführungsform der Erfindung werden kleinere, separat gehärtete Abschnitte derart auf der Lauffläche angeordnet, dass die Reibung zwischen dem Rad und der Schiene in Laufrichtung des Rades gross und in seitlicher Richtung (senkrecht zur Laufrichtung) klein ist. Hierdurch erhält man eine grosse Haftlänge für das Rad.

Bei der konventionellen Härtung von Spurkranz und Lauffläche von Eisenbahnrädern sowie auch bei der Laserhärtung gemäss der eingangs genannten Druckschrift wird die Härtung rotationssymmetrisch. Bei der Laserhärtung gemäss der Erfindung können Teile der Lauffläche (oder eventuell auch des Spurkranzes) auf eine nicht rotationssymmetrische Art gehärtet werden, wodurch es möglich ist, ein Eisenbahnrad herzustellen, bei dem die Reibung mit der Schiene in Laufrichtung des Rades gross und senkrecht dazu klein ist.

Ein Vorteil der Laserhärtung besteht darin, dass sie direkt im Zusammenhang mit der mechanischen Bearbeitung der Lauffläche des Rades durch Drehen oder Überdrehen erfolgen kann. Wegen der Konzentration (Bündelung) des Laserstrahles kann die Tiefe und Ausdehnung der Härtung in weiten Grenzen variiert werden. Die pro Flächeneinheit und Zeiteinheit zugeführte Energie lässt sich leicht steuern und die Tiefe der gehärteten Schicht kann leicht und genau den Anforderungen an das Produkt hinsichtlich Härte und Verschleissfestigkeit angepasst werden.

Das Härten kann auch leicht zusammen mit einem späteren Überdrehen des Rades geschehen, und die Erfindung kann sowohl bei Rädern aus einem Stück als auch bei Rädern mit aufgeschrumpftem Kranz angewendet werden. Auch die Lauffläche kann ganz oder teilweise gehärtet werden.

Bei einer bevorzugten Ausführungsform der Erfindung ist die Tiefe der Härtung für verschiedene gehärtete Teile des zur Lauffläche gerichteten Teils des Spurkranzes und der Lauffläche unterschiedlich.

Vorrichtungen zur Laserhärtung sind in vielen Ausführungsformen auf dem Markt erhältlich.

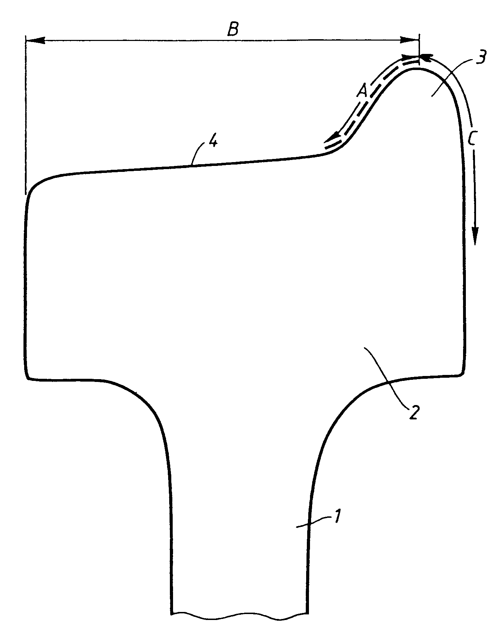

Anhand der Figur, die einen Teil eines Eisenbahnrads zeigt, soll die Erfindung näher erläutert werden.

Die Figur zeigt einen Teil eines aus einem Stück bestehenden Eisenbahnrades (Vollrad), jedoch kann die Erfindung auch bei einem Rad verwendet werden, bei dem der die Lauffläche und den Spurkranz umfassende äussere radiale Teil aus einem aufgeschrumpften Ring besteht. In der Figur ist die Radscheibe mit 1 und der Radkranz mit 2 bezeichnet. Das Rad hat eine Lauffläche 4 und einen Spurkranz 3. Der Abschnitt A von der radial äussersten Stelle des Spurkranzes 3 bis zum Übergang des Spurkranzes in die Lauffläche 4 oder Teile dieses Abschnittes A sowie die Lauffläche 4 oder Teile derselben sind lasergehärtet. Im Grenzfalle ist der gesamte Abschnitt Ades Spurkranzes und die Lauffläche 4 lasergehärtet, d. h., die Laserhärtung erstreckt sich über den gesamten Abschnitt B. Die - in bezug auf die Schiene gesehene - Aussenseite (C) des Spurkranzes bleibt ungehärtet, da im Falle der Härtung die Gefahr besteht, dass der Spurkranz beschädigt wird, wenn das Rad über Weichen oder ähnliche Stellen hinwegrollt.

Die genannte Laserhärtung kann im Zusammenhang mit dem Drehen und auch dem Überdrehen (Neudrehen) der Lauffläche und eventuell des Spurkranzes des Rades durchgeführt werden, was insbesondere im letztgenannten Fall vorteilhaft ist, da bei diesem Vorgang die früher gehärteten Teile des Rades abgedreht werden.

Dank der hohen Konzentration des Laserstrahles können die Tiefe und die Ausdehnung der Härtung bei der Laserhärtung in weiten Grenzen variiert werden. Die Laserhärtung kann in einem Arbeitsgang mit dem Drehen oder Überdrehen des Rades oder unmittelbar nach diesem Arbeitsvorgang erfolgen. Tiefe und/oder Ausdehnung der Härtung kann beispielsweise durch die Steuerung der zugeführten Energie pro Flächen-und/oder Zeiteinheit beeinflusst werden, so dass man beispielsweise die Tiefe der gehärteten Schicht den Anforderungen an das Produkt hinsichtlich Härte und Verschleissfestigkeit anpassen kann.

Man kann auch kleine separate Abschnitte härten und diesen beispielsweise in seitlicher Richtung eine grössere Ausdehnung als in tangentialer Richtung (Rotationsrichtung) geben. Hierdurch erreicht man eine grosse Reibung zwischen Lauffläche und Schiene in der Rotationsrichtung (Bewegungsrichtung) des Rades und eine kleine Reibung in seitlicher Richtung des Rades. Dies erhöht die Lebensdauer des Rades. Diese Massnahme ist von besonders grosser Bedeutung bei Antriebsrädern (Lokomotivrädern). Der Abstand zwischen der Vorrichtung zur Laserhärtung und der zu härtenden Oberfläche kann variiert werden, beispielsweise zur Steuerung des Härtungsgrades. Es istzweckmässig, die Härtungsvorrichtung mit senkrecht zur Oberfläche gerichtetem Laserstrahl einzustellen, jedoch kann auch diese Einstellung variiert werden. Man kann auch die Richtung der seitlichen Verschiebung der Härtungsvorrichtung verändern, um die Tiefe und Ausdehnung der Härtung zu beinflussen. Schliesslich kann der Laserstrahl auch auf einen Spiegel gerichtet und von diesem reflektiert werden, wobei das Härten durch Drehen und/oder Verschieben des Spiegels gesteuert werden kann. Der Abstand zwischen der Härtungsvorrichtung und der Oberfläche kann von 0 bis zu einem grösseren Wert variiert werden, jedoch treten im letztgenannten Falle Verluste durch Erwärmung der Luft auf.

Der in der Figur mit A bezeichnete Abschnitt soll hart sein, im übrigen soll die Oberfläche des Spurkranzes in der Regel nicht gehärtet werden. Jedoch wird/werden in gewissen Fällen auch die Lauffläche oder Teile der Lauffläche gehärtet. Der Abschnitt C des Spurkranzes wird nicht gehärtet. Man kann dort, wo derVerschleiss sehrgross ist, eine besonders grosse Härtetiefe vorsehen, es darf jedoch nicht die ganze Lauffläche gehärtet werden, da dann die gesamte Lauffläche unter Zugspannung stehen würde.

Als Material für das Eisenbahnrad gemäss der Erfindung können alle für Schienenfahrzeuge verwendeten bekannten Stahlsorten verwendet werden.

## Patentansprüche

1. Eisenbahnrad mit Lauffläche und Spurkranz, wobei der zur Lauffläche gerichtete Teil (A) des Spurkranzes oder ein Teil desselben lasergehärtet ist, dadurch gekennzeichnet, daß auch die Lauffläche (4) oder ein Teil oder Teile derselben in der Weise lasergehärtet ist/sind, daß diese Härtung kleine separate Abschnitte der Lauffläche erfaßt, die so liegen, daß die Reibung zwischen Schiene und Rad in Laufrichtung des Rades groß ist und senkrecht dazu (in seitlicher Richtung) klein ist.

2. Eisenbahnrad nach Anspruch 1, dadurch gekennzeichnet, daß die separat gehärteten Abschnitte der Lauffläche in seitlicher Richtung eine größere Ausdehnung als in Laufrichtung haben.

3. Eisenbahnrad nach einem der Ansprüche 1 oder 2, dadurch gekennzeichnet, daß das Härten im Zusammenhang mit der mechanischen Bearbeitung (Drehen) der Lauffläche durchgeführt wurde.

4. Eisenbahnrad nach einem der vorhergehenden Ansprüche, dadurch gekennzeichnet, daß die Härtetiefe zwischen verschiedenen gehärteten Teilen des zur Lauffläche gerichteten Teils des Spurkranzes oder der Lauffläche unterschiedlich ist.

5. Eisenbahnrad nach Anspruch 4, dadurch gekennzeichnet, daß die Härtetiefe durch Steuerung der zugeführten Energie pro Flächen- oder Zeiteinheit variiert wurde.

6. Eisenbahnrad nach einem der vorhergehenden Ansprüche, dadurch gekennzeichnet, daß die Außenseite (C) des Spurkranzes nicht gehärtet ist.

## Claims

1. Railroad car wheel with a running tread and a wheel flange, the portion (A) of the wheel flange which faces towards the running tread, or part of this portion, being laser-hardened, characterized in that also the running tread (4) or one or several portions thereof is/are laser-hardened in such a way that this hardening covers small separate portions of the running tread, which portions are positioned such that the friction between the rail and the wheel is great in the moving direction of the wheel and small in the direction perpendicularly thereto (in the lateral direction).

2. Railroad car wheel according to Claim 1, characterized in that the lateral extension of the separate hardened portions of the running tread is larger than the extension in the moving direction.

3. Railroad car wheel according claim 1 or 2, characterized in that the hardening is carried out in connection with the mechanical machining of the running tread.

4. Railroad car wheel according to any of the preceding claims, characterized in that the penetration depth of the hardening is different for the various hardened portions of the part (A) of the wheel flange or the running tread.

5. Railroad car wheel according to claim 4, characterized in that the penetration depth of the hardening has been influenced by controlling the energy supplied per unit of surface or time.

6. Railroad car wheel according to any of the preceding Claims, characterized in that the outer side (C) of the wheel flange is unhardened.

## Revendications

1. Roue de véhicule ferroviaire ayant une surface de roulement et un boudin, la partie (A) du boudin qui est dirigée vers la surface de roulement ou une partie de celui-ci étant trempée au laser, caractérisée par le fait que la surface de roulement (4) ou une partie de celle-ci est ou sont également trempées au laser, en ce que cette trempe concerne de petites sections distinctes de la surface de roulement situées de telle manière que la friction entre le rail et la roue est importante dans le sens de la rotation de la roue, mais est faible perpendiculairement à ce dernier (dans le sens latéral).

2. Roue pour véhicule ferroviaire selon la revendication 1 ou 2, caractérisée par le fait que les sections distinctes et trempées de la surface de roulement possèdent dans le sens latéral une extension plus grande que dans le sens de l'avancement.

3. Roue pour véhicule ferroviaire selon la revendication 1 ou 2, caractérisée par le fait que la trempe est réalisée en concomitance avec le traitement mécanique (travaux au tour) de la surface de roulement.

4. Roue pour véhicule ferroviaire selon l'une des revendications précédentes, caractérisée par le fait que la profondeur de la trempe est différente entre différentes parties trempées de la partie du boudin, dirigée vers la surface de roulement, ou de la surface de roulement.

5. Roue pour véhicule ferroviaire selon la revendication 5, caractérisée par le fait que la profondeur de la trampe a été modifiée par le réglage de l'énergie mise en oeuvre par unité de surface ou par unité de temps.

6. Roue pour véhicule ferroviaire selon l'une des revendications précédentes, caractérisée par le fait que le côté extérieur (C) du boudin n'est pas trem- p^{é.}
